# EUROPEAN PATENT SPECIFICATION

(11) **EP 2 059 630 B1**
(45) Date of publication and mention of the grant of the patent: **09.06.2010**
(21) Application number: 07801123.6
(22) Date of filing: 24.08.2007
(51) Int. Cl.: D01D 5/00

(54) **ROTARY SPINNING ELECTRODE**
DREHBARE SPINNELEKTRODE
ÉLECTRODE DE FILAGE TOURNANTE

(30) Priority: 04.09.2006 CZ 20060545
(43) Date of publication of application: 20.05.2009
(73) Proprietor: Elmarco, S.R.O., 460 07 Liberec (CZ)
(72) Inventor: PETRAS, David, 464 01 Pertoltice (CZ); MALY, Miroslav, 464 01 Visnova (CZ); POZNER, Jan, 460 07 Liberec (CZ); TRDLICKA, Jan, 379 Trebon (CZ); KOVAC, Martin, 226 23 Cenkov (CZ)
(74) Representative: Musil, Dobroslav
(86) International application number: PCT/CZ2007/000082
(87) International publication number: WO 2008/028428

(56) References cited:
- DE-A1- 10 136 255
- GB-A- 2 010 935
- P KATTA, M ALESSANDRO, RAMSIER AND G G CHASE: "Continuous Electrospinning of Aligned Polymer Nanofibers onto a Wire Drum Collector" NANO LETTERS, vol. 4, no. 11, 28 September 2004 (2004-09-28), pages 2215-2218, XP002466227

## Description

### Technical field

The invention relates to the rotary spinning electrode of an elongated shape for the device for production of nanofibres through electrostatic spinning of polymer solutions comprising a pair of end faces, between them there are positioned spinning members formed by wire, which are distributed equally along the circumference and parallel with axis of rotation of rotary spinning electrode.

### Background art

So far known devices for production of nanofibres from polymer solution through electrostatic spinning, which contain a pivoted spinning electrode of an oblong shape, are for example disclosed in WO 2005/024101 A1. The device comprises the spinning electrode in the shape of a cylinder, which rotates around its main axis and by a lower section of the surface it is soaked into the polymer solution. Polymer solution is by a surface of the cylinder carried out into the electric field between the spinning and collecting electrode, where the nanofibres are created, which are carried away towards the collecting electrode and before it they deposit on a substrate material. This device is very good capable to produce nanofibres from water polymer solutions, nevertheless the layer of nanofibres applied on the substrate material is not uniformly spread along the whole length of spinning electrode.

Greater uniformity of produced layer of nanofibres is achieved through the device according to the CZ PV 2005-360, that describes a spinning electrode comprising system of lamellae arranged radial and longitudinally around the axis of rotation of spinning electrode, while the coating surface of portions of area of the spinning electrode serving to carry out the polymer solution into electric field in a plane passing through an axis of spinning electrode and perpendicular to a plane of substrate material has a shape formed by equipotential line of electric field between the spinning electrode and collecting electrode of the highest intensity. Such spinning electrode is able to carry out a sufficient quantity of polymer solution to the most suitable places of electric field between the spinning and collecting electrode, and at the same time to spin also the non-water solutions of polymers and to produce a uniform layer of nanofibres. Nevertheless, a demanding production of such spinning electrode, and consequently also its price represents the disadvantage.

DE 101 36 255 B4 discloses a device for production of fibres from polymer solution or polymer melt comprising at least two spinning electrode mechanisms, each of them is formed by a system of parallel wires mounted on a pair of continuous belts embraced around two guiding cylinders, which are positioned one above another, while the lower guiding cylinder extends into the polymer solution or molten polymer. Between these two spinning electrode mechanisms the textile is passed as an counter electrode, while the spinning electrode mechanisms simultaneously create coating both on face side and backside of the textile.

The spinning electrode is connected to a source of high voltage together with counter electrode, which is formed by an electrically conductive circulating belt. Polymer solution or polymer melt are carried out by means of wires into electric field between the spinning electrode and counter electrode, where are from the polymer solution or polymer melt produced fibres, which are carried to counter electrode and impinge on textile positioned on counter electrode. A long time of staying of polymer solution or polymer melt in electric field represents a disadvantage, because the polymer solution as well as the polymer melt are subject to ageing quite quickly, and during the spinning process it changes its properties, which results also in changes of parameters of produced fibres, especially of their diameter. Another disadvantage is mounting of wires of the spinning electrode on a pair of endless belts, which are either electrically conducting and they very negatively influence an electric field created between the spinning electrode and the counter electrode, or they are electrically non-conducting and high voltage is to the wires of spinning electrodes supplied by means of sliding contacts, in preference to one up to three wires, which makes the spinning device to be uselessly complicated.

The goal of the invention is to create a simple and reliable spinning electrode for a device for production of nanofibres from polymer solution through electrostatic spinning in the electric field created between the collecting electrode and spinning electrode.

### The principle of invention

The goal of the invention is achieved by a rotary spinning electrode for the device for production of nanofibres through electrostatic spinning of polymer solutions containing a pair of end faces, between them there are positioned spinning members formed by wire, which are distributed equally along the circumference of end faces, while the principle of the invention consists in that the end faces are made of electrically non-conducting material and all spinning members are mutually connected in a electrically conductive manner. The spinning electrode created in this manner is able to spin water as well as non-water polymer solution and along its whole length it reaches a highly uniform spinning effect, while electric field for spinning is created between the individual spinning members after they step off the polymer solution and subsequently approach to the collecting electrode.

Mutual electrical connection of all spinning members is reached so that they are made of one metal cord stretched alternately from one end face to another in grooves or openings performed along the circumference of the end faces.

This can be achieved by creating the rotary spinning electrode according to the claim 3 or 4, when the cord on the end face either runs to the following groove or opening, through which it passes to the second end face, or on the end face it is guided crosswise into the groove or opening on opposite side of circumference of the end face. At embodiment according to the claim 3 there is a smaller consumption of the cord, while at the embodiment according to the claim 4 the mutual connection of all spinning members is reached not only through that they are made of one piece, but moreover by their crossing on the end faces.

In embodiment according to the claim 5 the spinning members are divided into pairs, out of which each is formed by one metal cord and these cords are crossed on end faces.

To secure the mutual position of the end faces between which alternately runs cord or cords, that create the spinning elements of spinning electrode, according to the claim 6 these end faces are positioned on one shaft.

More advantageous conditions of the spinning process are then achieved when using spinning electrode in embodiment according to the claims 7 or 8, when the electrically conductive shaft is superseded or its section between the end faces is covered by electrically non-conducting spacing tube.

Similar effect may be also achieved by removing the electrically conductive shaft from a space between the end faces, and through mounting of each of the end faces to an independent hinge, that is coupled with the drive of spinning electrode. By coupling the end faces with the drive it is obtained that the end faces will rotate in the same direction and in the same speed, and that also unchanging mutual position of these end faces is ensured, thus also parallel position of spinning means mounted in grooves or holes in end faces with rotation axis of the end faces.

### Description of the drawing

The rotary spinning electrode is schematically shown in enclosed drawings, where the Fig. 1 shows axonometric view of electrode according to the invention, the Fig. 2 axonometric view of electrode in embodiment with spinning members formed by one cord crossing on end faces , the Fig. 3 a view to electrode in embodiment with spinning members divided into pairs, out of which each is formed by one cord crossing on end faces , and the Fig. 4 shows mounting of the spinning electrode in alternative embodiment without shaft in reservoir of polymer solution.

### Examples of embodiment

In one embodiment of rotary spinning electrode **1** according to the invention the rotary spinning electrode **1** comprises two end faces **2** and **3,** out of which each is formed by a disk of electrically non-conducting material, for example plastic, mounted concentrically on a shaft **4** perpendicular to its longitudinal axis **41,** which is simultaneously axis of rotation of the shaft **4** and the spinning electrode **1.** Along the whole circumference of the end face **2** there are evenly performed radial grooves **21, 22**, **23, 24, 25** and **26,** and along the whole circumference of the end face **3,** whose diameter is the same as diameter of the end face **2,** there are evenly performed radial grooves **31, 32**, **33**, **34**, **35** and **36.** The radial grooves on circumference of the end faces **2, 3** are arranged against each other. In radial grooves on circumference of the end face **2** and in radial grooves on circumference of the end face **3** there is mounted the cord **5** of electrically conducting material, which is enclosed into endless loop.

The cord **5** comes out from the radial groove - e.g. **21** - on circumference of the end face **2** and parallel with the axis **41** of the shaft **4** it runs into the opposite groove **31** on the circumference of the end face **3,** while the section of the cord **5** between the groove **21** and the opposite groove **31** creates one from the spinning elements of the spinning electrode **1**.

Through the groove 31 passes the cord **5** to the outer side of the end face **3,** reversed from the end face **2,** and through this groove it runs into the neighbouring groove **32,** from which the cord **5** parallel with the axis **41** of the shaft **4** runs outside into the opposite groove **22** on the circumference of the end face **2.** Section of the cord **5** between the groove **32** and opposite groove 22 so creates another spinning element of the spinning electrode **1.**

By means of the groove **22** the cord **5** passes to the outer side of the end face **2,** reversed from the end face **3,** on which it runs into the neighbouring groove **23.** From the groove **23** the cord **5** runs parallel with the axis **41** of a shaft **4** into the opposite groove **33** on circumference of the end face **3,** while the section of the cord **5** between the grooves **23** and **33** creates another spinning element of the spinning electrode **1**.

In the same way the cord **5** passes further through the following radial grooves **34, 35** and **36** on circumference of the end face **3** and through the following radial grooves **24, 25** and **26** on circumference of the end face **2,** while the sections of the cord **5** between the end faces **2** and **3** parallel with axis **41** create individual spinning elements of the spinning electrode **1**, while the sections of the cord **5** run on outer sides of the end faces **2** and **3** interconnect the spinning elements in a conductive manner.

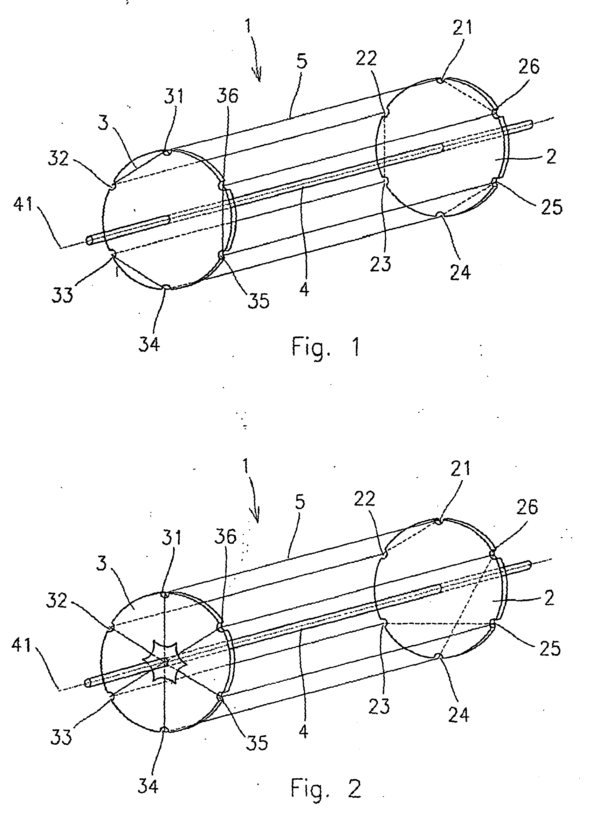

The cord **5** may be in radial grooves on circumference of the end face **2** and the end face **3** mounted in several further different manners, out of which one is shown in the Fig. 2. In this example of embodiment the cord **5** is, same as in the previous example, enclosed into endless loop, while in this case thanks to manner of its mounting in radial grooves on circumference of the end face **2** and on circumference of the end face **3** the cord **5** is crossed on outer sides of the end faces **2** and **3.**

Through radial groove - e.g. **21** - on circumference of the end face **2** the cord **5** passes parallel with the axis **41** of the shaft **4,** into the opposite groove **31** on circumference of the end face **3,** while the section of the cord **5** between the grooves **21** and **31** form one of the spinning elements of the spinning electrode **1.** By means of the groove **31** the cord **5** passes to the outer side of the end face **3,** reversed from the end face **2,** through which it runs into the groove **34** performed in an opposite section of circumference of the end face 3.

After passing the groove **34** the cord **5** runs parallel with the axis **41** of the shaft **4** into the opposite groove **24** on circumference of the end face **2,** while the section of the cord **5** between the grooves **34** and **24** forms another spinning element of the spinning electrode **1.** Through the groove **24** the cord **5** is brought to outer side of the end face **2,** on which it runs to the groove 26 performed in an opposite section of circumference of the end face 2.

Having left the groove **26** the cord **5** is parallel with the axis **41** of the shaft **4** brought into the opposite groove **36** on circumference of the end face **3**, and between the grooves **26** and **36** it forms another spinning element of the spinning electrode **1**. Through the groove **36** the cord **5** is further brought to the outer side of the end face **3,** on which it runs to the groove **33** performed in an opposite section of circumference of the end face **3**, while on the end face **3** the cord **5** is crossed.

The cord **5** from the groove **33** further runs parallel with the axis **41** of the shaft **4** into the opposite groove **23** on circumference of the end face **2**, whereby the section of the cord **5** between the grooves **33** and **23** forms another spinning element of the spinning electrode **1**. By means of the groove **23** the cord **5** passes to the outer side of the end face **2**, on which it further runs into the groove **25** performed in an opposite section of circumference of the end face **2**, while on the outer side of the end face **2** the cord **5** is crossed.

After passing the groove **25** the cord **5** runs parallel with axis **41** of the shaft **4** into opposite groove **35** on circumference of the end face **3**, and its section between the grooves **25** and **35** creates another spinning element. By means of the groove **35** the cord **5** is brought to the outer side of the end face **3**, on which it runs into the groove **32** performed in opposite section of circumference of the end face **3**, so that on the end face **3** the cord **5** is crossed again.

From the groove **32** the cord further runs parallel with the axis **41** of the shaft **4** into the opposite groove **22** on circumference of the end face **2**, whereby it forms another spinning element of the spinning electrode **1**. Through the groove **22** the cord **5** is brought onto outer side of the end face **2**, on which it is brought into the groove **21**.

Other not represented examples of embodiment from the above described embodiments represented in Fig. 1 and Fig. 2 may differ especially by mounting the cord **5** in radial grooves on circumference of the end faces **2** and **3**, while the cord **5** is always endless, made of one piece and its ends are connected on one of the end faces **2, 3**.

Depending on technology of production of nanofibres through electrostatic spinning of polymer solutions the cord **5** in a device for production of nanofibres is through a known manner connected with one pole of the not represented source of high voltage, possibly it is grounded, so that on all spinning elements of the spinning electrode there is the same voltage.

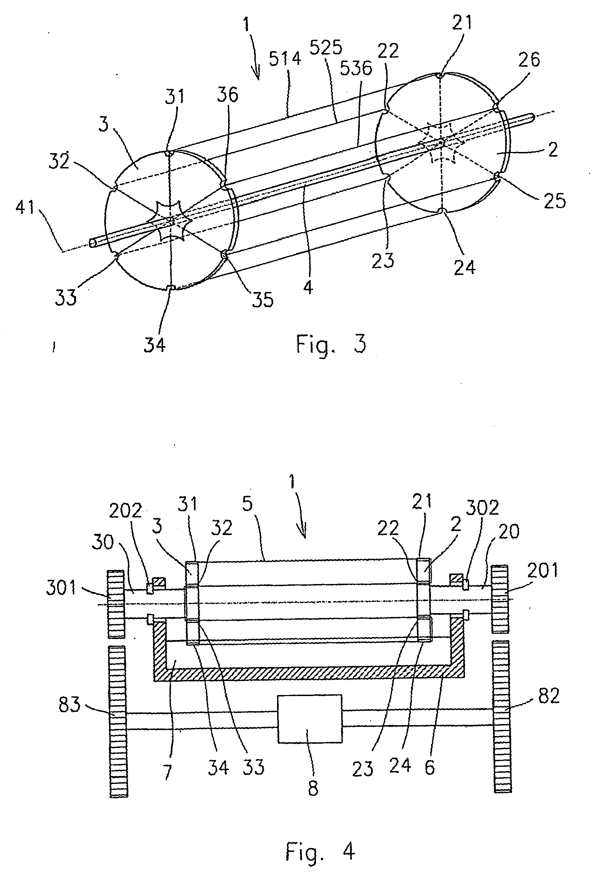

Example of embodiment of the spinning electrode **1**, which is from the point of view of maintenance and possible replacement of the damaged or defective spinning elements the most suitable is represented on the Fig. 3. The spinning electrode **1** is made in the same way as in the previous embodiments according to the Fig. 1 and 2 with the only difference, that the endless loop from the cord **5** is in the represented example of embodiment formed by three independent endless loops **514**, **525** and **536**, which cross mutually each other on the end faces.

The cord **514** comes out from the radial groove **21** on circumference of the end face **2**, and parallel with the axis **41** of the shaft **4** enters into the opposite groove **31** on circumference of the end face **3** and its section between the grooves **21** and **31** forms one of the spinning elements of the spinning electrode **1**. Through the groove **31** the cord **514** is brought to outer side of the end face **3**, on which it runs into the groove **34** in opposite section of circumference of the end face **3**, through which passes parallel with axis **41** of the shaft **4** into the opposite groove **24** on circumference of the end face **2**, and so creates between the grooves **34** and **24** another spinning element of the spinning electrode **1**. Through the groove **24** the cord **514** is brought to outer side of the end face **2** on which it runs into the neighbouring groove **21**.

In the same manner there is in radial grooves **22**, **32**, **25** and **35** mounted the cord **525** enclosed into an endless loop, and in radial grooves **23**, **33**, **26** and **36** the cord **536** enclosed into an infinite loop, while on outer sides of the end faces **2** and **3** all three cords **514**, **525** and **536** are crossed, whereby their conductive connection is ensured.

In further examples of embodiment derived from the example in the Fig. 3, it is possible to create further different not represented arrangements of the cords **514, 525** and **536** creating a pair of spinning elements of the spinning electrode **1**, while all these cords are mutually connected in a conducting manner - e.g. by their mutual contacts. In a case when the cords are not crossed, their conducting connection is performed on outer side of any or both end faces **2** and **3** through another known methods or means.

The cord **514** and/or cord **525** and/or cord **536** is then in dependence on production technology of nanofibres connected in a known manner with one pole of the not represented source of high voltage, possibly it is grounded.

Taking into account that during the rotation of the spinning electrode **1** (see bellow) electrostatic fields are subsequently created between the spinning elements of the spinning electrode **1** and the not represented collecting electrode arranged in the spinning chamber in the space above the spinning electrode **1**, it is advantageous, if the shaft **4** in the space between the end faces **2** and **3** is superseded by a spacing tube of electrically non-conducting material. The spacing tube then considerably contributes not only to screening of electric fields of opposite spinning elements of the spinning electrode **1**, thus to stabilisation of the spinning process, but also to higher stiffness of the spinning electrode **1**.

The shaft **4**, possibly the spacing tube of the spinning electrode **1** according to some of the shown examples of embodiment is in the device for production of nanofibres horizontally and rotatably mounted in the not represented reservoir of polymer solution, while some of the spinning elements on a lower side of the spinning electrode **1** reversed from the collecting electrode are plunged into the polymer solution contained in reservoir of polymer solution, while in a case when the shaft **4** is superseded by a spacing tube, there is no undesired contact between the spacing tube and polymer solution. The shaft **4,** possibly the spacing tube or other part of the spinning electrode is further in a known manner coupled with not represented drive for rotation motion of the spinning electrode **1**.

During operation of the device for production of nanofibres through electrostatic spinning of polymer solutions, the spinning electrode **1** thanks to the drive rotates around its longitudinal axis and its spinning elements positioned uniformly along the circumference of the end faces **2** and **3** are subsequently plunged under the level of polymer solution in the reservoir of polymer solution and thanks to its physical properties they emerge above the level covered by the polymer solution. Having emerged the spinning element with polymer solution subsequently approaches to the collecting electrode, which is in dependence on the technology of electrostatic spinning grounded or connected to the opposite pole of high voltage source than the spinning elements of the spinning electrode **1.** In the moment when the spinning element approaches sufficiently to the collecting electrode, between it and the collecting electrode as a result of difference of their electric potentials there is created a sufficiently strong electric field, which along the whole length of the spinning element initiates the spinning process. During the spinning process the polymer nanofibres are created from the polymer solution on surface of the spinning element, which through the action of force of electrostatic field move towards the collecting electrode.

The spinning element remains in a position suitable for spinning of the polymer solution on its surface only for a certain time interval, whose length is adequate to the speed of rotation of the spinning electrode **1** around axis **41,** and after expiry of this time interval it is moved away from vicinity of the collecting electrode and consequently again plunged into the polymer solution in the reservoir of polymer solution. Into the vicinity of the collecting electrode meanwhile subsequently get further spinning elements containing the polymer solution for spinning on their surface. The spinning electrode with described arrangement of the spinning elements thus enables a continuous production of nanofibres.

The construction of the spinning electrode **1** nevertheless is not restricted only to the above described examples of embodiment and their modifications. Further possibilities of arrangement of individual elements of the spinning electrode further result from arrangement and structure of other parts of the device for production of nanofibres. One of such examples is represented in the Fig. 4. The spinning electrode **1** in this case comprises two end faces **2** and **3,** out of which each is formed by a disk from electrically non conducting material.

The end faces **2** and **3** on the outer side are provided with hinges **20** and **30**, which are rotatably and axially mounted in opposite walls of the reservoir **6** of polymer solution **7**. At their ends the hinges are provided with tooth wheels **201**, **301** and in the mounting their mutual axial position is secured by some of the known manner, in the represented example of embodiment by means of the distance rings **202**, **302** mounted in necks in the hinges **20** and **30** and abuting against the outer wall of the reservoir **6** of polymer solution. The tooth wheels **201, 301** are coupled with driving tooth wheels **82, 83**, which are coupled with the drive **8**. Connection of tooth wheels **201, 301** and driving tooth wheels **82**, **83** serves not only for a drive of the end faces **2** and **3** in the same direction and with the same speed, but also to ensure the constant mutual position of the end faces **2** and **3**, in which the corresponding grooves in both end faces **2** and **3** are arranged against each other, so that through these grooves passing spinning means is parallel with rotation axis of the end faces **2** and **3**. Along the whole circumference of the end face **2** there are evenly positioned radial grooves **21**, **22**, **23**, **24**, **25** and **26** and around the whole circumference of the end face **3** there are evenly positioned radial grooves **31**, **32**, **33**, **34**, **35** and **36**, while through the radial grooves on circumference of the end face **2** and radial grooves on circumference of the end face **3** according to some of the above described examples of embodiments there runs the cord **5** enclosed into an endless loop or several cords **5** enclosed into several endless loops.

On basis of all of the above mentioned examples of embodiments nearly unlimited quantity of various more or less different variants of spinning electrode **1** may be created, which vary from the described examples of embodiment especially by a number of radial grooves on circumference of the end faces **2** and **3**, thus by a number of spinning elements of the spinning electrode **1**, possibly through that the cord **5** or cords **5** are not enclosed into the endless loop, but that they begin and finish on an outer side of some of the end faces **2**, **3**. Further differences may be attained also through a various embodiments of the end faces **2** and **3**, which may be created in principle as any three dimensional body. The most convenient solution of the end faces **2** and **3** nevertheless seems to be the disk of electrically non-conducting material, whose edges are rounded with respect to the durability and safeness of the cord **5** or cords **5**, and to minimisation of effect of these end faces **2** and **3** on the spinning process as well.

Another possible variant of embodiment of the spinning electrode **1** according to the invention is the variant, when in the end faces **2** and **3** there are, instead of the radial grooves, performed openings, in which one or more cords **5** are positioned, Upon usage of the spinning electrode **1** of this structure nevertheless there occur difficulties caused especially by influence of polymer solution, which is into the electrostatic field between the collecting and spinning electrode **1** carried on surfaces of the end faces **2** and **3**. The danger of initiation of spinning process on the end faces is prevented by suitable wiping means of polymer solution allocated to the end faces.

### Industrial applicability

The spinning electrode according to the invention is applicable in a device for production of nanofibres through electrostatic spinning of water as well as non-water polymer solutions.

### List of referential markings

- 1: spinning electrode
- 2: end face
- 20: hinge
- 201: tooth wheel
- 202: distance ring
- 21: radial groove
- 22: radial groove
- 23: radial groove
- 24: radial groove
- 25: radial groove
- 26: radial groove
- 3: end face
- 30: hinge
- 301: tooth wheel
- 302: distance ring
- 31: radial groove
- 32: radial groove
- 33: radial groove
- 34: radial groove
- 35: radial groove
- 36: radial groove
- 4: shaft
- 41: shaft axis
- 5: cord
- 514: cord
- 525: cord
- 536: cord
- 6: reservoir of polymer solution
- 7: polymer solution
- 8: drive
- 81: driving tooth wheel
- 82: driving tooth wheel

## Claims

1. The rotary spinning electrode (1) of an elongated shape for the device for production of nanofibres through electrostatic spinning of polymer solutions, comprising a pair of end faces (2, 3), between them there are positioned spinning members formed by wire, which are distributed equally along the circumference and parallel with axis of rotation (41) of the rotary spinning electrode (1), which serves to carry out the polymer solution form the reservoir of polymer solution into electric field for spinning, **characterised by that the** end faces (2, 3) are made of electrically non-conducting material and all the spinning members are mutually connected in electrically conductive manner.

2. The rotary spinning electrode (1) according to the claim 1, **characterised by that the** spinning members are formed by one metal cord (5) stretched alternately from one end face (2, 3) to another in grooves (21, 22, 23, 24, 25, 26, 31, 32, 33, 34, 35, 36) or openings performed along the circumference of the end faces (2, 3).

3. The rotary spinning electrode according to the claim 2, **characterised by that the** cord (5) runs on the end face (2, 3) to the following groove (21, 22, 23, 24, 25, 26, 31, 32, 33, 34, 35, 36) or to an opening, through which it passes to the second end face (2, 3).

4. The rotary spinning electrode according to the claim 2, **characterised by that the** cord **5** runs on the end face (2, 3) crosswise to the groove (21, 22, 23, 24, 25, 26, 31, 32, 33, 34, 35, 36) or opening on opposite side of circumference of the end face (2, 3).

5. The rotary spinning electrode according to the claim 1, **characterised by that the** spinning members are divided into pairs formed by one metal cord (5), while these cords are crossed on the end faces (2, 3).

6. The rotary spinning electrode according to any of the preceding claims, **characterised by that the** end faces (2, 3) are mounted on the shaft (4).

7. The rotary spinning electrode according to any of the claims 1 to 5, **characterised by that the** end faces (2, 3) are mounted on electrically non-conducting spacing tube.

8. The rotary spinning electrode according to the claim 6, **characterised by that the** section of the shaft (4) between the end faces is covered by electrically non-conducting spacing tube.

9. The rotary spinning electrode according to any of the claims 1 to 5, **characterised by that the** end faces (2, 3) on the outer side are axially connected with the hinges (20, 30) mounted rotatably and aligned axially in opposite walls of the reservoir (6) of polymer solution (7), while the radial grooves (21, 22, 23, 24, 25, 26) or openings in the end face (2) are arranged against the radial grooves (31, 32, 33, 34, 35, 36) or openings in the second end face (3), and the hinges (20, 30) are coupled with the drive (8) of the spinning electrode (1).

## Patentansprüche

1. Rotationsspinnelektrode (1) einer länglichen Form in die Vorrichtung zur Erzeugung der Nanofasern durch elektrostatisches Verspinnen der polymeren Lösungen, die ein Paar der Stirnen (2, 3) aufweist, zwischen denen die durch einen Draht gebildeten Verspinnungselemente gelagert sind, die auf dem Umfang gleichmäßig verteilt und mit der Rotationsachse (41) der Rotationsspinnelektrode (1) parallellaufend sind, die dem Hinaustragen der polymeren Lösung aus dem Behälter ins elektrische Feld zum Verspinnen dienen, **dadurch gekennzeichnet, dass** die Stirnen (2, 3) aus einem elektrisch nicht leitenden Material gebildet sind und alle Verspinnungsglieder untereinander elektrisch leitend verbunden sind.

2. Rotationsspinnelektrode (1) nach dem Anspruch 1, **dadurch gekennzeichnet, dass** die Verspinnungsglieder durch eine metallische Saite (5) gebildet sind, die wechselweise von einer Stirn (2, 3) zu anderer in den Aussparungen (21, 22, 23, 24, 25, 26, 31, 32, 33, 34, 35, 36) oder in den Öffnungen gespannt ist, die auf dem Umfang der Stirnen (2, 3) gebildet sind.

3. Rotationsspinnelektrode nach dem Anspruch 2, **dadurch gekennzeichnet, dass** die Saite (5) nach der Stirn (2, 3) zu der folgenden Aussparung (21, 22, 23, 24, 25, 26, 31, 32, 33, 34, 35, 36) oder der Öffnung geführt wird, durch die sie zu anderer Stirn (2, 3) übergeht.

4. Rotationsspinnelektrode nach dem Anspruch 2, **dadurch gekennzeichnet, dass** die Saite (5) nach der Stirn (2, 3) kreuzweise in die Aussparung (21, 22, 23, 24, 25, 26, 31, 32, 33, 34, 35, 36) oder die Öffnung auf der gegenüberliegenden Seite des Umfangs der Stirn (2, 3) geführt wird.

5. Rotationsspinnelektrode nach dem Anspruch 1, **dadurch gekennzeichnet, dass** die Verspinnungsglieder auf die Paare aufgeteilt sind, die durch eine metallische Saite (5) gebildet werden, wobei sich diese Saiten auf den Stirnen (2, 3) überkreuzen.

6. Rotationsspinnelektrode nach einem der vorgehenden Ansprüche, **dadurch gekennzeichnet, dass** die Stirnen (2, 3) auf einer Welle (4) gelagert sind.

7. Rotationsspinnelektrode nach einem der Ansprüche 1 bis 5, **dadurch gekennzeichnet, dass** die Stirnen (2, 3) auf einem elektrisch nichtleitenden Abstandrohr gelagert sind.

8. Rotationsspinnelektrode nach dem Anspruch 6, **dadurch gekennzeichnet, dass** ein Teil der Welle (4) zwischen den Stirnen durch ein elektrisch nicht leitendes Abstandrohr abgedeckt ist.

9. Rotationsspinnelektrode nach einem der Ansprüche 1 bis 5, **dadurch gekennzeichnet, dass** die Stirnen (2, 3) auf der äußeren Seite mit den Zapfen (20, 30) koaxial verbunden sind, die in den gegenüberliegenden Wänden des Behälters (6) der polymeren Lösung (7) drehbar und koaxial gelagert sind, wobei die Radialaussparungen (21, 22, 23, 24, 25, 26) oder die Öffnungen in der Stirn (2) gegen die Radialaussparungen (31, 32, 33, 34, 35, 36) oder die Öffnungen in der anderen Stirn (3) angeordnet sind, und die Zapfen (20, 30) mit dem Antrieb (8) der Verspinnungselektrode (1) verkoppelt sind.

## Revendications

1. L'électrode rotative de filage (1) ayant une forme allongée pour le dispositif pour la production des nanofibres par l'effet de filage électrostatique des solutions de polymères, comprenant le couple de faces frontales (2, 3), entre lequelles sont déposés, par le fil formés des membres de filage, divisés de façon uniforme sur la circonférence et parallèles avec l'axe de rotation (41) des électrodes rotatives de filage (1), servant pour remonter de la solution de polymères du réservoir dans le champ électrique pour le filage, **caractérisé en ce que** les faces frontales (2, 3) sont formées du matériau diélectrique et, tous les membres de filage sont mutuellement liés de façon électrique conductive.

2. L'électrode rotative de filage (1) suivant la revendication 1, **caractérisé en ce que** les membres de filage sont formés par une corde métallique (5), tendue alternativement d'une face frontale (2, 3) à l'autre dans les rainures (21, 22, 23, 24, 25, 26, 31, 32, 33, 34, 35, 36), ou dans les ouvertures formées sur la circonférence des faces frontales (2, 3).

3. L'électrode rotative de filage suivant la revendication 2, **caractérisé en ce que** la corde (5) est sur la face frontale (2, 3) menée vers la rainure suivante (21, 22, 23, 24, 25, 26, 31, 32, 33, 34, 35, 36), ou vers l'ouverture, par laquelle elle arrive à l'autre face frontale (2, 3).

4. L'électrode rotative de filage suivant la revendication 2, **caractérisé en ce que** la corde (5) est sur la face frontale (2, 3) menée en croix dans la rainure (21, 22, 23, 24, 25, 26, 31, 32, 33, 34, 35, 36), ou dans l'ouverture sur le côté opposé de la circonférence de la face frontale (2, 3).

5. L'électrode rotative de filage suivant la revendication 1, **caractérisé en ce que** les membres de filage sont divisés en couples formés par corde métallique (5), en temps que ces cordes se croisent sur les faces frontales (2, 3).

6. L'électrode rotative de filage suivant quelconque des revendications sus-mentionnées, **caractérisé en ce que** les faces frontales (2, 3) sont déposées sur l'arbre (4).

7. L'électrode rotative de filage suivant quelconque des revendications de 1 à 5, **caractérisé en ce que** les faces frontales (2, 3) sont déposées sur un tuyau d'écartement diélectrique.

8. L'électrode rotative de filage suivant la revendication 6, **caractérisé en ce qu'** une partie de l'arbre (4) entre les faces frontales est couverte par un tuyau d'écartement diélectrique.

9. L'électrode rotative de filage suivant quelconque des revendications de 1 à 5, **caractérisé en ce que** les faces frontales (2, 3) sont sur le côté postérieur reliées de façon de l'alignement coaxial avec les goujons (20, 30), déposés de façon rotative et de l'alignement coaxial dans les parois opposées du réservoir (6) de la solution de polymères (7), en temps que les rainures radiales (21, 22, 23, 24, 25, 26) ou les ouvertures dans la face frontale (2) sont rangées contre les rainures (31, 32, 33, 34, 35, 36), ou contre les ouvertures dans l'autre face frontale (3), et les goujons (20, 30) sont accouplés avec la commande (8) de l'électrode de filage (1).
